# EUROPEAN PATENT SPECIFICATION

(11) **EP 1 719 669 B1**
(45) Date of publication and mention of the grant of the patent: **22.05.2013**
(21) Application number: 06007821.9
(22) Date of filing: 13.04.2006
(51) Int. Cl.: B60R 21/20, B60R 21/201

(54) **A method of packaging an air-bag and an air-bag packaged by the method**
Verfahren zum Verpacken eines Luftsackes und ein durch dieses Verfahren verpackter Luftsack
Procédé pour l'emballage d'un coussin gonflable et un coussin gonflable emballé avec ce procédé

(30) Priority: 06.05.2005 GB 0509320
(43) Date of publication of application: 08.11.2006
(73) Proprietor: AUTOLIV DEVELOPMENT AB, 447 83 Vargarda (SE)
(72) Inventor: Hellot, Laurent, 76220 La Feuillie (FR); Haesaert, Charles, 76660 Fresnoy Folny (FR)
(74) Representative: Beattie, Alex Thomas Stewart

(56) References cited:
- EP-A- 0 738 630
- GB-A- 2 339 408
- US-B1- 6 296 270

## Description

**THE PRESENT INVENTION** seeks to provide an improved method for packaging an air-bag and an air-bag packaged by the method.

An air-bag is typically packed in a housing, the housing also containing a gas generator or inflator to provide gas to inflate the air-bag. The air-bag is typically folded within the housing so that the air-bag may inflate readily when the gas generator or inflator is actuated.

An air-bag is typically manufactured and packaged within a housing in one location, and is then transported to another location where the air-bag, still within its housing, is incorporated into a motor vehicle.

Typically the housing is provided with an open mouth, through which the air-bag will emerge on inflation, and the air-bag is retained within the housing between the point of manufacture and the point of installation in a vehicle. In many cases a soft cover or wrapper is used to extend over the opening of the air-bag housing to retain the air-bag in the housing.

The soft cover or wrapper performs the function of holding or retaining the folded air-bag in position within the housing during transportation and handling, thus minimising the volume of the air-bag which may protrude from the housing opening. Typically it is difficult to compress the air-bag sufficiently to hold the whole of the air-bag within the housing.

It is desirable to retain as much of the air-bag as possible within the housing, since, typically, when the housing is mounted in position within a motor vehicle there is very little space between the open mount of the housing and a cover, provided in the vehicle behind which the housing is mounted. The cover may, for example, be part of a dashboard or may be part of the "horn button" on a steering wheel. If the air-bag protrudes substantially from the housing the air-bag may engage the rear side of the cover and may deform the cover.

The soft cover or wrapper is designed to be relatively weak, so that the cover does not have sufficient strength to affect the movement of the air-bag during inflation.

Arrangements of the type described above may be used for all kinds of air-bags such as driver air-bags, passenger air-bags, side air-bags or knee bags.

A typical cover or wrapper as in use at the present time is formed of an elastic or non-elastic material, and typically the wrapper is attached, at one edge, by adhesive tape, to the outside of the housing. The wrapper is applied by a human operative. If a portion of the air-bag is protruding above the edge of the housing the operator has to stretch or tension the wrapper across the top of the protruding air-bag to push the air-bag down, before adhering the other edge of the wrapper to the housing, again using, for example, adhesive tape.

The act of stretching or tensioning may apply undesirable stress on the hands and lower arms of the operative, and this repeated application of stress can, in the long term, gives rise to medical problems for the operative.

Also, of course, if adhesive tape is used to secure the wrapper in position, there is a risk that the adhesive present on the adhesive tape will age, and may lose its adhesive properties.

GB2339408 discloses an air-bag assembly including a metal housing or mounting plate and a cover, the cover having a plurality of resilient tongues parallel with the side walls of the cover, each tongue having a first abutment which is brought into engagement with a second abutment on the housing or mounting plate by movement of the tongue away from the centre of the housing. The first abutment may be an aperture or recess in the resilient tongue and the second abutment may be a protrusion directed towards the centre of the housing, such as a second tongue at the edge of an aperture in the housing through which the resilient tongue passes. A blocking element may be provided to engage each tongue and retain it in a position with the two abutments engaged, said blocking element may be an elastically or plastically deformable integral part of the housing, which may be held in the engaged position by a protrusion on the tongue. The resilient tongues may be integral with the cover which may be made of a resilient polymer material.

The invention seeks to provide an improved method of packing an air-bag and an air-bag packed by the method.

According to this invention there is provided a method of packaging an air-bag, the method comprising the steps of introducing an air-bag into an housing having a mouth, applying a cover to the housing and connecting parts of the cover to deformable retaining tabs provided on the housing, and subsequently deforming the retaining tabs to apply tension to the cover to retain the cover in position, and tighten the cover across the open mouth of the housing to retain the air-bag within the housing.

Preferably the retaining tabs are formed integrally with the housing.

Conveniently the housing is formed from sheet metal and the retaining tabs are stamped and formed from the sheet metal.

Advantageously a mechanical press is utilised to apply downward force of a predetermined magnitude to each retaining tab to deform the retaining tabs.

Preferably the cover is formed of non-elastic material.

Conveniently each retaining tab is provided with a protruding finger and the cover is provided with apertures to engage the protruding fingers, the method comprising the step of engaging the apertures in the cover with the protruding fingers of the retaining tabs to connect the cover to the tabs.

The invention also provides an air-bag packaged within a housing having a mouth, there being a cover extending across an open mouth of the housing to retain the air-bag within the housing, the cover being connected to deformed retaining tabs provided on the housing to retain the cover in position, the cover tightened across the open mouth of the housing to retain the air-bag within the housing.

Preferably each retaining tab is formed of an element that is provided with a protruding finger, the protruding finger being received within an aperture formed in the cover.

Conveniently each retaining tab is formed integrally with the housing, and is moveable relative to the housing with a consequent deformation of the material forming the housing and the retaining tab.

In order that the invention may be more readily understood, and so that further features thereof may be appreciated, the invention will now be described, by way of example, with reference to the accompanying drawings in which:
FIGURE 1 is an exploded perspective view of an air-bag housing containing an inflator, an air-bag and a cover for the air-bag,
FIGURE 2 is an enlarged view of a mounting tab for the air-bag,
FIGURE 3 is another enlarged view of the mounting tab,
FIGURE 4 is a sectional view through the housing of Figure 1 during the packing of the air-bag, and
FIGURE 5 is a perspective view of a second form of air-bag housing.

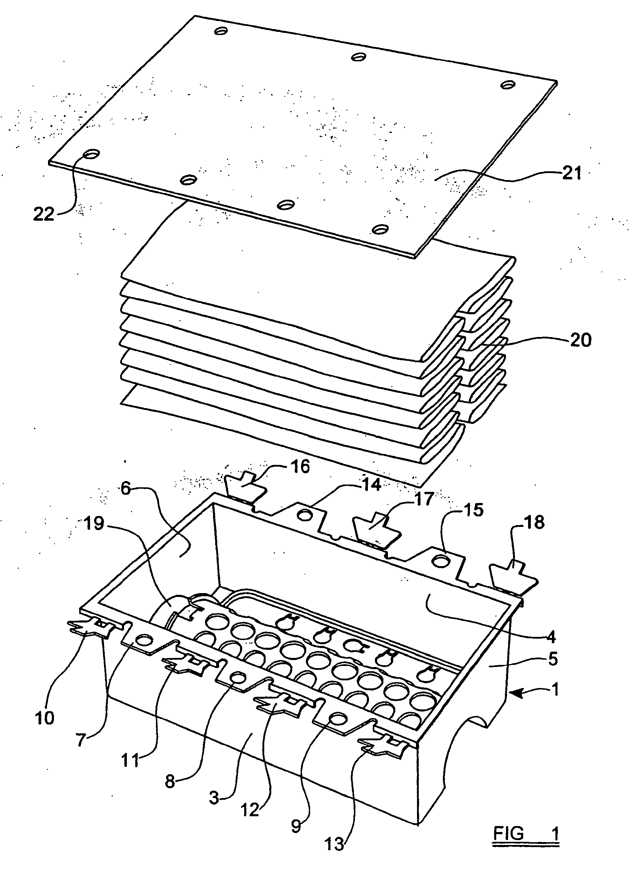

Referring initially to Figure 1 of the accompanying drawings, a housing 1 is provided which is to contain an air-bag. The housing is formed of sheet metal. The housing is provided with a base 2, upstanding side walls 3,4 and upstanding end walls 5,6. The upstanding side wall 3 is provided with three protruding securing tabs 7,8,9 each of which is apertured to receive a securing bolt to assist in securing the housing in position within a motor vehicle. In alternation with the securing tabs 7,8,9 are deformable retaining tabs 10, 11, 12, 13, one of which will be described in greater detail below, to engage and retain an air-bag cover.

The opposed side wall 4 is provided with two outwardly directed securing tabs 14,15, corresponding to the securing tabs 7,8,9 and, alternating with the securing tabs 14 and 15 are three retaining tabs 16,17,18, corresponding with the retaining tabs 10,11,12.

The securing and retaining tabs may be provided by stamping and forming the metal sheet that constitutes the housing 1.

Contained within the housing 1 is a generally cylindrical inflator or gas generator 19 which may be of conventional form.

An air-bag 20 is shown schematically in a folded state. The air-bag 20 is to be stored within the housing 1. The air-bag will, of course, be mounted in the housing in such a way that the gas generator 19 is within the air-bag so that the gas from the gas generator will inflate the air-bag.

A cover 21 is provided formed of a non-elastic material. The cover 21 is provided with connectors in the form of apertures 22, to enable the cover to be connected to each of the retaining tabs 10-13 and 16-18.

The securing tabs 7,8,9,14,15 are all of the same form and comprise a tab that extends horizontally from the top of the appropriate side wall. Each of the tabs has an aperture to receive a bolt or equivalent fastener to secure the housing 1 in position in a motor vehicle.

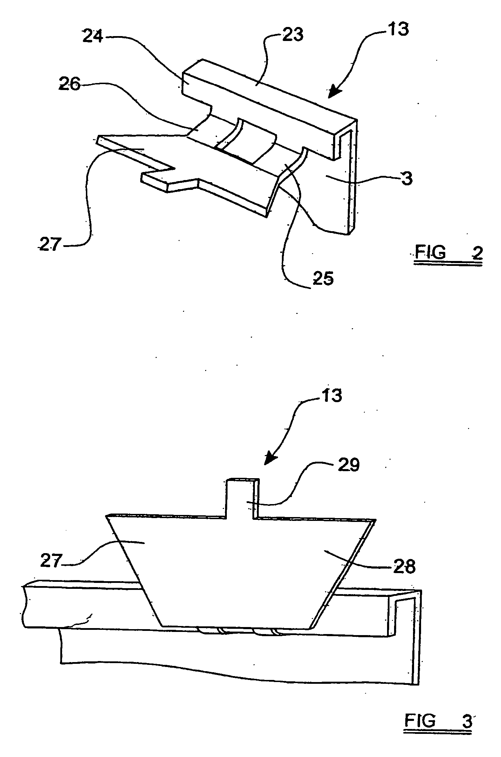

In the described embodiment each of the retaining tabs 10-13 and 16-18 has a similar design. One retaining tab, the retaining tab 13, is shown in Figures 2 and 3.

As can be seen, the retaining tab 13 is effectively connected to an upper part of the side wall 3. The uppermost edge of the side wall 3 carries an outwardly extending flange 23, the outwardly extending flange 23 carrying a depending support wall 24. The lower part of the support wall 24 carries two forwardly extending support fingers 25,26, the fingers 25,26 supporting a generally upwardly inclined plate 27. The plate 27, shown more clearly in Figure 3, has a trapezoidal form with a relatively narrow base carried by the forwardly extending fingers 25,26, and a relatively wide top. The plate 27 carries, in the centre part of the uppermost edge, a projecting finger 28.

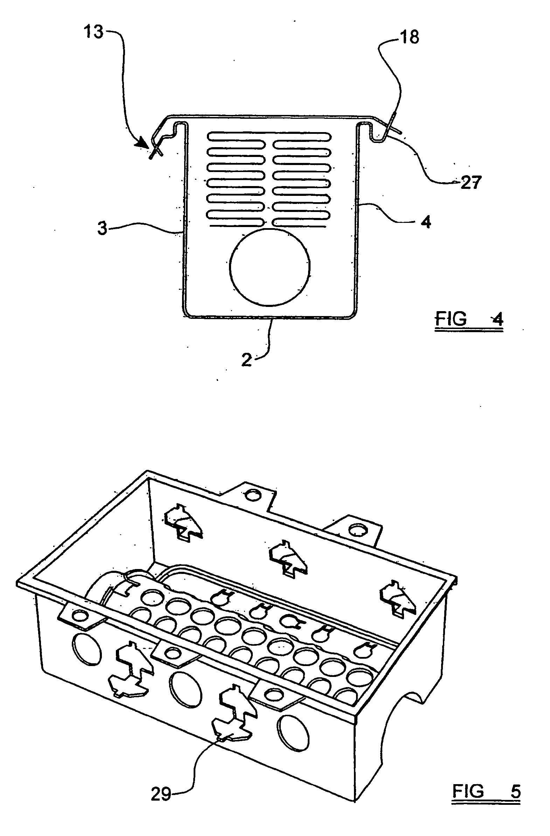

It is to be appreciated that, initially, the plate 27 is inclined outwardly and upwardly. Thus, initially, the plate 27 has the orientation of the retaining tab 18 as shown in the sectional view of Figure 4.

With the retaining tabs all upwardly inclined, and with the air-bag 20 being located within the housing 1, the cover 21 may be located in position with the connector apertures 22 each engaging with a respective finger 28 of a respective tab. The cover 21 may thus initially loosely extend above the air-bag, part of which may project above the uppermost lip of the housing 1.

The retaining tabs 1.0-13 and 16-18 may then be deformed downwardly, to have the orientation of the tab 13, as seen in Figure 4. If the retaining tabs on both sides of the housing are deformed downwardly, the cover 21 will be tightened across the open mount of the housing 1 thus retaining the air-bag within the housing.

As the retaining tabs 10-13 and 16-18 may be moved downwardly with a deformation, which is a permanent deformation, of the material forming the tabs, or the material forming the connection between the tabs and the side wall, the cover may be tensioned, and tension will remain within the cover.

The deformable retaining tabs may be moved downwardly by an appropriate mechanical press configured to apply a downward force of a predetermined magnitude to each retaining tab.

It is thus to be appreciated that, when an air-bag is packaged, initially the air-bag is introduced into the housing, and subsequently a cover is located across the open mouth of the housing, with parts of the cover being connected to the deformable retaining tabs. The deformable retaining tabs are then deformed to apply tension to the cover to retain the cover in position extending across the mouth of the housing and keeping the air-bag in the housing.

Whilst, in the embodiment described with references to Figures 1 to 4, each retaining tab is effectively formed at the uppermost edge of the housing side wall 3, it is to be noted that retaining tabs may be press-formed from a central part of the side wall, as shown in the embodiment of Figure 5.

Referring to Figure 5, part of the housing equivalent to the housing 1 is illustrated showing a plurality of retainer tabs 29 which are stamped and deformed outwardly from the side wall of the housing. Again, parts of the cover may be secured to the retaining tabs 29, with the tabs subsequently being deformed to apply tension to the cover.

It is to be understood that, if necessary, the cover may be provided with cutouts to accommodate the securing tabs 7, 8, 9, 14 and 15.

When used in this Specification and Claims, the terms "comprises" and "comprising" and variations thereof mean that the specified features, steps or integers are included. The terms are not to be interpreted to exclude the presence of other features, steps or components.

## Claims

1. A method of packaging an air-bag (20), the method comprising the steps of introducing an air-bag (20) into a housing (1) having an open mouth, applying a cover (21) to the housing (1) and connecting parts of the cover (21) to deformable retaining tabs (10-13,16-18) provided on the housing (1), **characterised by** the step of subsequently deforming the retaining tabs (10-13,16-18) to apply tension to the cover (21) to retain the cover (21) in position, and tighten the cover (21) across the open mouth of the housing (1) to retain the air-bag (20) within the housing (1).

2. A method according to claim 1 wherein the retaining tabs (10-13,16-18) are formed integrally with the housing (1).

3. A method according to claim 2 wherein the housing (1) is formed from sheet metal and the retaining tabs (10-13,16-18) are stamped and formed from the sheet metal.

4. A method according to any one of the preceding claims wherein a mechanical press is utilised to apply downward force of a predetermined magnitude to each retaining tab (10-13,16-18) to deform the retaining tabs (10-13,16-18).

5. A method according to any one of the preceding claims wherein the cover (21) is formed of non-elastic material.

6. A method according to any one of the preceding claims wherein each retaining tab (10-13,16-18) is provided with a protruding finger (28) and the cover (21) is provided with apertures (22) to engage the protruding fingers (28), the method comprising the step of engaging the apertures (22) in the cover (21) with the protruding fingers (28) of the retaining tabs (10-13,16-18) to connect the cover (21) to the tabs (10-13,16-18).

7. An air-bag (20) packaged within a housing (1) having an open mouth, there being a cover (21) extending across an open mouth of the housing (1) to retain the air-bag (20) within the housing (1), the cover (21) being connected to deformed retaining tabs (10-13,16-18) provided on the housing (1) **characterised by** the deformed retaining tabs (10-13,16-18) applying tension to the cover to retain the cover (21) in position, the cover (21) tightened across the open mouth of the housing (1) to retain the air-bag (20) within the housing (1).

8. An air-bag (20) according to claim 7 wherein each retaining tab (10-13,16-18) is formed of an element that is provided with a protruding finger (28), the protruding finger (28) being received within an aperture (22) formed in the cover (21).

9. An air-bag (20) according to Claim 7 or 8 wherein each retaining tab (10-13,16-18) is formed integrally with the housing (1), and is moveable relative to the housing (1) with a consequent deformation of the material forming the housing (1) and the retaining tab (10-13,16-18).

## Patentansprüche

1. Verfahren zum Verpacken eines Luftsacks (20), wobei das Verfahren die Schritte des Einlegens eines Luftsacks (20) in ein Gehäuse (1) mit einer offenen Öffnung, des Auflegens einer Abdeckung (21) auf das Gehäuse (1) und des Verbindens von Teilen der Abdeckung (21) mit verformbaren Haltelaschen (10-13, 16-18), die an dem Gehäuse (1) vorgesehen sind, umfasst, **gekennzeichnet durch** den Schritt des anschließenden Verformens der Haltelaschen (10-13, 16-18), um die Abdeckung (21) auf Zug zu beanspruchen, um die Abdeckung (21) in ihrer Position zu halten und die Abdeckung (21) über die offene Öffnung des Gehäuses (1) zu straffen, um den Luftsack (20) innerhalb des Gehäuses (1) zu halten.

2. Verfahren nach Anspruch 1, wobei die Haltelaschen (10-13, 16-18) einteilig mit dem Gehäuse (1) geformt werden.

3. Verfahren nach Anspruch 2, wobei das Gehäuse (1) aus Blech geformt wird und die Haltelaschen (10-13, 16-18) aus dem Blech gestanzt und geformt werden.

4. Verfahren nach einem der vorhergehenden Ansprüche, wobei eine mechanische Presse verwendet wird, um eine nach unten gerichtete Kraft mit einer festgelegten Stärke auf jede Haltelasche (10-13, 16-18) aufzubringen, um die Haltelaschen (10-13, 16-18) zu verformen.

5. Verfahren nach einem der vorhergehenden Ansprüche, wobei die Abdeckung (21) aus unelastischem Material geformt wird.

6. Verfahren nach einem der vorhergehenden Ansprüche, wobei jede Haltelasche (10-13, 16-18) mit einem herausragenden Finger (28) versehen wird und die Abdeckung (21) mit Öffnungen (22) versehen wird, um mit den herausragenden Fingern (28) in Eingriff zu gelangen, wobei das Verfahren den Schritt des In-Eingriff-Bringens der Öffnungen (22) in der Abdeckung (21) mit den herausragenden Fingern (28) der Haltelaschen (10-13, 16-18) umfasst, um die Abdeckung (21) mit den Laschen (10-13, 16-18) zu verbinden.

7. Luftsack (20), der in einem Gehäuse (1) mit einer offenen Öffnung verpackt ist, wobei sich eine Abdeckung (21) über eine offene Öffnung des Gehäuses (1) erstreckt, um den Luftsack (20) innerhalb des Gehäuses (1) zu halten, wobei die Abdeckung (21) mit verformten Haltelaschen (10-13, 16-18) verbunden ist, die an dem Gehäuse (1) vorgesehen sind, **dadurch gekennzeichnet, dass** die verformten Haltelaschen (10-13, 16-18) die Abdeckung auf Zug beanspruchen, um die Abdeckung (21) in ihrer Position zu halten, wobei die Abdeckung (21) über die offene Öffnung des Gehäuses (1) gestrafft ist, um den Luftsack (20) innerhalb des Gehäuses (1) zu halten.

8. Luftsack (20) nach Anspruch 7, wobei jede Haltelasche (10-13, 16-18) aus einem Element geformt ist, das mit einem herausragenden Finger (28) versehen ist, wobei der herausragende Finger (28) in einer Öffnung (22) aufgenommen ist, die in der Abdeckung (21) ausgebildet ist.

9. Luftsack (20) nach Anspruch 7 oder 8, wobei jede Haltelasche (10-13, 16-18) einteilig mit dem Gehäuse (1) ausgebildet ist, und bezogen auf das Gehäuse (1) beweglich ist, mit einer sich daraus ergebenden Verformung des Materials, das das Gehäuse (1) und die Haltelasche (10-13, 16-18) bildet.

## Revendications

1. Procédé pour l'emballage d'un coussin gonflable (20), le procédé comprenant les étapes consistant à introduire un coussin gonflable (20) dans un boîtier (1) présentant un orifice ouvert, appliquer un couvercle (21) sur le boîtier (1) et connecter des parties du couvercle (21) à des languettes de retenue déformables (10-13, 16-18) prévues sur le boîtier (1), **caractérisé par** l'étape consistant à déformer ultérieurement les languettes de retenue (10-13, 16-18) pour appliquer une tension au couvercle (21) pour maintenir le couvercle (21) en position, et serrer le couvercle (21) à travers l'orifice ouvert du boîtier (1) pour retenir le coussin gonflable (20) à l'intérieur du boîtier (1).

2. Procédé selon la revendication 1, dans lequel les languettes de retenue (10-13, 16-18) sont formées de manière intégrale avec le boîtier (1).

3. Procédé selon la revendication 2, dans lequel le boîtier (1) est formé à partir de tôle métallique et les languettes de retenue (10-13, 16-18) sont estampées et formées à partir de la tôle métallique.

4. Procédé selon l'une quelconque des revendications précédentes, dans lequel une presse mécanique est utilisée pour appliquer une force vers le bas d'une grandeur prédéterminée sur chacune des languettes de retenue (10-13, 16-18) pour déformer les languettes de retenue (10-13, 16-18).

5. Procédé selon l'une quelconque des revendications précédentes, dans lequel le couvercle (21) est formé en un matériau non élastique.

6. Procédé selon l'une quelconque des revendications précédentes, dans lequel chaque languette de retenue (10-13, 16-18) est dotée d'un doigt faisant saillie (28) et le couvercle (21) est doté d'ouvertures (22) pour entrer en prise avec les doigts faisant saillie (28), le procédé comprenant l'étape consistant à amener en prise les ouvertures (22) dans le couvercle (21) avec les doigts faisant saillie (28) des languettes de retenue (10-13, 16-18) pour connecter le couvercle (21) aux languettes (10-13, 16-18).

7. Coussin gonflable (20) emballé dans un boîtier (1) présentant un orifice ouvert, un couvercle (21) s'étendant à travers un orifice ouvert du boîtier (1) pour retenir le coussin gonflable (20) à l'intérieur du boîtier (1), le couvercle (21) étant connecté à des languettes de retenue déformées (10-13, 16-18) prévues sur le boîtier (1), **caractérisé en ce que** les languettes de retenue déformées (10-13, 16-18) appliquent une tension au couvercle pour maintenir le couvercle (21) en position, le couvercle (21) étant serré à travers l'orifice ouvert du boîtier (1) pour retenir le coussin gonflable (20) à l'intérieur du boîtier (1).

8. Coussin gonflable (20) selon la revendication 7, dans lequel chaque languette de retenue (10-13, 16-18) est formée d'un élément qui est doté d'un doigt faisant saillie (28), le doigt faisant saillie (28) étant reçu à l'intérieur d'une ouverture (22) formée dans le couvercle (21).

9. Coussin gonflable (20) selon la revendication 7 ou 8, dans lequel chaque languette de retenue (10-13, 16-18) est formée de manière intégrale avec le boîtier (1), et est mobile par rapport au boîtier (1) avec une déformation résultante du matériau formant le boîtier (1) et la languette de retenue (10-13, 16-18).
